# FASCICULE DE BREVET EUROPEEN

(11) **EP 1 445 882 B1**
(45) Date de publication et mention de la délivrance du brevet: **29.10.2008**
(21) Numéro de dépôt: 04011509.9
(22) Date de dépôt: 11.12.1997
(51) Int. Cl.: H04L 7/04, H04J 3/06

(54) **Trame de transmission de données, et procédé et dispositif d'émission et de réception d'une telle trame**
Datenübertragungsrahmen und Verfahren und Einrichtung, um einen solchen Rahmen zu senden oder zu empfangen
Data transmission frame and method and device for sending and receiving such a frame

(30) Priorité: 13.12.1996 FR 9615385
(43) Date de publication de la demande: 11.08.2004
(62) Demande divisionnaire de: 97403003.3
(73) Titulaire: Alcatel Lucent, 75008 Paris (FR)
(72) Inventeur: Dupuy, Pierre, 75017 Paris (FR)
(74) Mandataire: El Manouni, Josiane

(56) Documents cités:
- EP-A- 0 216 066
- EP-A- 0 367 215

## Description

La présente invention concerne les techniques de transmission de données, plus particulièrement les techniques de transmission de données selon lequelles les données transmises sont structurées en trames comportant des données utiles précédées d'un motif de synchronisation destiné à permettre une synchronisation d'un équipement récepteur sur un équipement émetteur.

Dans ce type de transmission, il est nécessaire de se prémunir contre les risques d'imitation du motif de synchronisation par les données utiles. Ceci est décrit par exemple dans le document EP 0 216 066. C'est pourquoi on insère habituellement, parmi les données utiles, des bits destinés à éviter une telle imitation: par exemple, si le motif de synchronisation est une séquence de huit bits à 0, on insère des bits à 1 tous les sept bits.

On comprend cependant que les bits ainsi insérés le sont au détriment de bits de données utiles, ce qui soulève donc un problème d'efficacité de la trame, notamment lorsque, à débit constant, on souhaiterait pouvoir augmenter la charge utile transmise.

La présente invention a notamment pour but d'apporter une solution à ce problème.

Il est par ailleurs connu, du document EP 0 367 215, un procédé suivant lequel, en dehors de tout problème de synchronisation de trame, pour éviter qu'une suite de 16 bits de valeur 0 d'une trame à transmettre ne perturbe la récupération d'horloge bit en réception, on découpe la trame en intervalles de temps de 8 bits, ou autrement dit on analyse cette trame au moyen d'une fenêtre fixe de largeur 8 bits, et lorsqu'on détecte des séquences de 8 bits de valeur 0, au lieu de transmettre de telles séquences, on transmet des séquences de 8 bits contenant des données permettant d'identifier les intervalles de temps de la trame où de telles séquences doivent être réinsérées en réception.

Un des objets de la présente invention consiste dans une trame de transmission de données, cette trame comportant des données utiles précédées d'un motif de synchronisation, et étant essentiellement caractérisée en ce qu'elle ne comporte aucune séquence de données utiles imitant ledit motif de synchronisation, dites aussi séquences interdites, celles-ci étant remplacées par des données dites de substitution destinées à permettre, en réception, de pouvoir réinsérer ces séquences interdites parmi les données utiles reçues.

Ainsi, les séquences de données utiles imitant ledit motif de synchronisation étant supprimées pour transmission, il n'est plus nécessaire d'émettre régulièrement des bits destinés à éviter une telle imitation, et, sous réserve que lesdites données de substitution n'excèdent pas, en nombre, les données utiles ainsi supprimées, un gain d'efficacité de cette trame peut ainsi être obtenu.

Suivant une autre caractéristique, lesdites données de substitution comportent elles-mêmes deux types de données:
- des données dites d'exploitation, permettant, en réception, de déterminer dans quelle mesure des séquences interdites sont présentes dans la séquence de données utiles à transmettre,
- des données dites d'adresse, permettant, en réception, de déterminer plus précisément le ou les emplacements où une séquence interdite doit être insérée parmi les données utiles reçues.

Suivant une autre caractéristique, lesdites données de substitution comportent elles-mêmes deux types de données:
- des données dites d'exploitation, permettant, en réception, de déterminer dans quelle mesure des séquences interdites sont présentes dans la séquence de données utiles à transmettre,
- des données dites d'adresse, permettant, en réception, de déterminer plus précisément le ou les emplacements où une séquence interdite doit être insérée parmi les données utiles reçues.

En outre, dans le document EP 0 367 215, au plus 7 bits d'une séquence de 8 bits étant disponibles pour indiquer l'intervalle de temps de la trame reçue où doit être réinsérée une séquence de 8 bits à 0, le nombre maximum d'intervalles de temps par trame est égal à 2⁷ (soit 128), et donc le nombre maximum de bits par trame est égal à 8.2⁷ (soit 1024).

La présente invention permet notamment, pour un même nombre N de bits d'une séquence interdite, d'accroître le nombre maximum M de bits par trame.

Ainsi, suivant une autre caractéristique, le nombre de bits d'une séquence de substitution est égal au nombre de bits d'une séquence interdite, et, suivant une autre caractéristique, "n" bits d'une séquence de substitution de N bits étant utilisés pour constituer lesdites données d'adresse (avec "n" au plus égal à N-1), le nombre maximum M de bits par trame est égal à 2ⁿ.

Ainsi, à titre de comparaison avec le document précité, avec N égal à 16, et "n" égal à N-1, le nombre M obtenu avec la présente invention est égal à 32768, ce qui est très supérieur aux 1024 bits obtenu suivant le document précité.

Un autre objet de la présente invention consiste dans un procédé d'émission de telles trames, permettant l'élaboration de telles trames à partir d'un train incident de données utiles, ce procédé étant essentiellement caractérisé en ce qu'il comporte les étapes de:
- analyse dudit train incident, en vue de détecter des séquences de données utiles imitant ladite séquence interdite,
- calcul de données de substitution destinées à permettre, en réception, de pouvoir réinsérer des séquences interdites parmi les données utiles reçues,
- émission de données utiles ne comportant aucune séquence interdite, et de données de substitution ainsi calculées, pour formation de ladite trame.

Suivant une autre caractéristique, ladite étape d'analyse est une étape d'analyse au moyen d'une fenêtre glissante de largeur égale à N bits, où N désigne le nombre de bits d'une séquence interdite.

La présente invention a également pour objet un dispositif d'émission correspondant.

Un autre objet de la présente invention consiste dans un procédé de réception de telles trames, permettant l'extraction d'un train de données utiles à partir de telles trames ainsi reçues.

La présente invention a également pour objet un dispositif de réception correspondant.

La présente invention est notamment applicable à la transmission au sein des infrastructures d'un réseau de radiocommunication avec des mobiles tel que notamment le réseau GSM (pour: "Global System for Mobile Communication"). Des données utiles sont en effet transportées dans ces infrastructures au moyen de telles trames comportant des données utiles précédées d'un motif de synchronisation, notamment de trames dites trames TRAU ( pour :"Transcoder/Rate Adapter Unit"). Le débit de ces trames fixe donc le débit maximum pour les services de transmission de données offerts par ce réseau, qui est actuellement de 9600 bit/s pour les trames dites TRAU à 16 kbit/s, ou pour des trames obtenues par multiplexage deux à deux de trames dites trames TRAU à 8 kbit/s. La présente invention permet ainsi de repousser ce débit maximum au delà des limites actuelles, et d'autoriser un service de transmission de données à un débit supérieur à 9600 bit/s, en permettant d'accroître la charge utile transportée par de telles trames TRAU à 16 kbit/s ou de telles trames obtenues par multiplexage deux à deux de telles trames TRAU à 8 kbit/s.

D'autres objets et caractéristiques de la présente invention apparaîtront à la lecture de la description suivante d'exemples de réalisation, faite en relation avec les dessins ci-annexés dans lesquels:
- la figure 1 est un diagramme destiné à illustrer un exemple de séquence de données utiles à transmettre,
- les figures 2, 3, et 4 sont des diagrammes destinés à illustrer respectivement un premier, un deuxième et un troisième exemple de trame suivant l'invention, permettant la transmission d'une telle séquence de données utiles,
- la figure 5 est un diagramme destiné à illustrer un exemple de contenu de séquences dites de substitution transmises dans une trame suivant l'invention,
- la figure 6 est un diagramme destiné à illustrer un procédé d'élaboration de trames suivant ledit premier exemple ou suivant ledit deuxième exemple, à partir d'un train incident de données utiles,
- la figure 7 est un diagramme destiné à illustrer un procédé d'élaboration de trames suivant ledit troisième exemple, à partir d'un train incident de données utiles,
- la figure 8 est un diagramme destiné à illustrer un procédé d'extraction de données utiles, à partir de trames reçues suivant ledit premier exemple,
- la figure 9 est un diagramme destiné à illustrer un procédé d'extraction d'un train de données utiles, à partir de trames reçues suivant ledit deuxième exemple ou suivant ledit troisième exemple.

A titre d'exemple, le motif de synchronisation est, dans ce qui suit, formé d'une séquence de bits à 0, ce qui correspond notamment à l'application mentionnée plus haut aux trames dites TRAU à 8kbit/s et 16 kbit/s, le motif de synchronisation de la trame TRAU à 8 kbit/s étant en effet formé d'une séquence de huit bits à 0, et celui de la trame TRAU à 16 kbit/s étant formé d'une séquence de seize bits à 0.

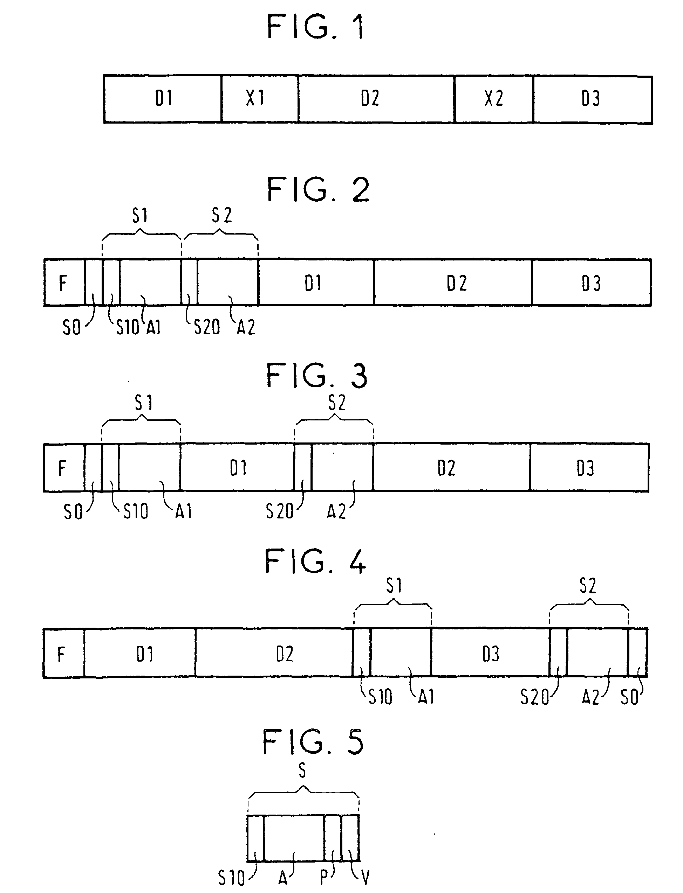

Une séquence de données utiles à transmettre pouvant toujours se décomposer en séquences, dites ici séquences autorisées, ne contenant pas elles-mêmes de séquence imitant le motif de synchronisation, et en séquences, dites ici séquences interdites, imitant le motif de synchronisation, on a illustré sur la figure 1 une telle séquence de données utiles se décomposant à titre d'exemple en trois séquences autorisées notées D1, D2, D3, et en deux séquences interdites notées X1, X2, ladite séquence de données utiles comportant en l'occurrence, dans l'ordre, les séquences D1 X1 D2 X2 D3.

La trame suivant l'invention, permettant, comme illustré sur les figures 2 à 4, de transmettre une telle séquence de données utiles, ne comporte donc aucune séquence interdite telle que X1 ou X2, mais comporte au contraire des données dites de substitution, destinées à permettre, en réception, de pouvoir réinsérer ces séquences interdites parmi les données utiles reçues.

Ces données de substitution comportent elles-mêmes avantageusement deux types de données:
- des données dites ici d'exploitation, permettant à un équipement récepteur de déterminer dans quelle mesure la séquence de données utile transmise diffère de la séquence de données utiles à transmettre, c'est-à-dire dans quelle mesure des séquences interdites sont présentes dans la séquence de données utiles à transmettre,
- des données dites ici d'adresse, permettant à un équipement récepteur de déterminer plus précisément le ou les emplacements où une séquence interdite doit être insérée parmi les données utiles reçues.

Dans l'exemple illustré, lesdites données d'adresse, notées A1 et A2, sont contenues dans des séquences dites de substitution, notées S1 et S2, qui se substituent respectivement aux séquences interdites X1 et X2 ( dites aussi séquences substituées). La séquence de substitution S1 contient ainsi une adresse A1 permettant, dans l'exemple illustré, à un équipement récepteur d'insérer la séquence interdite X1 entre les séquences reçues correspondant aux séquences autorisées (ou séquences non substituées) D1 et D2, et la séquence de substitution S2 contient ainsi une adresse A2 permettant à un équipement récepteur d'insérer la séquence interdite X2 entre les séquences reçues correspondant aux séquences autorisées ( ou non substituées) D2 et D3.

A titre d'exemple lesdites données d'exploitation peuvent comporter:
- des premières données d'exploitation, telles que celles notées S0 sur les figures 2 à 4, transmises à un emplacement déterminé après le motif de synchronisation F (par exemple immédiatement après ce motif de synchronisation) , et indiquant si la séquence de données utiles transmise diffère ou non de la séquence de données utiles à transmettre, c'est-à-dire si la séquence de données utiles transmise contient ou non des séquences substituées,
- des deuxièmes données d'exploitation, telles que celles notées S10 et S20 sur les figures 2 à 4, transmises avantageusement dans lesdites séquences de substitution telles que S1 et S2, et indiquant si chacune de ces séquences de substitution est ou non la dernière de la trame transmise.

Suivant un autre exemple, non illustré spécifiquement, lesdites données d'exploitation pourraient aussi comporter le nombre, éventuellement nul, de séquences substituées contenues dans la séquence de données utiles transmise.

La figure 5 est un diagramme destiné à illustrer un exemple de contenu de séquence de substitution.

Dans cet exemple une séquence de substitution, notée de manière générale S, comporte:
- lesdites deuxièmes données d'exploitation telles que S10 par exemple, constituées par exemple par un bit à 1 ou à 0 suivant que la séquence de substitution considérée est ou non la dernière de la trame transmise,
- des données d'adresse, telles que A1 ou A2, constituées par exemple par un nombre binaire à "n" bits indiquant le rang d'un bit dans une séquence de 2ⁿ bits utiles à transmettre,
- des données, notées P, de protection de cette séquence de substitution contre les erreurs de transmission (ces données de protection étant par exemple constituées par un bit de parité),
- des données dites de verrouillage, notées V, destinées à éviter qu'une séquence interdite soit reproduite par introduction d'une séquence de substitution dans la trame transmise (ces données de verrouillage étant par exemple constituées par un bit à 1 dans l'exemple considéré de séquence interdite formée uniquement de bits à 0).

Ainsi, dans cet exemple, le nombre "n" de bits d'une séquence de substitution utilisés pour constituer lesdites données d'adresse est égal à N-3, où N désigne le nombre de bits d'une séquence de substitution. Le nombre maximum M de bits par trame est alors égal à 2^{N-3}. Plus généralement, le nombre maximum M de bits par trame est égal à 2ⁿ, avec "n" au plus égal à N-1 (le cas "n" égal à N-1 correspondant au cas où les données P et V ne sont pas nécessaires, et où les données S10 comportent un seul bit).

Dans l'exemple illustré sur la figure 2, l'ensemble formé par les données d'exploitation et les données d'adresse ( c'est-à-dire l'ensemble formé par les premières données d'exploitation S0 et les séquences de substitution telles que S1, S2 incluant elles-mêmes des deuxièmes données d'exploitation telles que S10 et S20 et des données d'adresse telles que A1 et A2) est transmis avant l'ensemble des données utiles.

Cet exemple convient ainsi plus particulièrement au cas où le délai au bout duquel les bits utiles sont extraits d'une telle trame en réception peut ne pas être fixe, ce délai étant en effet dans cet exemple essentiellement variable et fonction du nombre de séquences de substitution présentes dans la trame, ce qui peut être inacceptable dans certaines applications telles que par exemple l'application précitée à la transmission au sein des infrastructures d'un réseau de radiocommunication avec des mobiles tel que notamment le réseau GSM.

Ceci est évité dans l'exemple illustré sur la figure 3.

Plus précisément, dans cet exemple, la première séquence de substitution S1 est transmise à un emplacement déterminé après les premières données d'exploitation S0, elles-mêmes transmises à un emplacement déterminé après le motif de synchronisation (par exemple la première séquence de substitution S1 est transmise immédiatement après les premières données d'exploitation S0, elles-mêmes transmises immédiatement après le motif de synchronisation), et la deuxième séquence de substitution S2 est transmise à la place de la première séquence substituée X1 (ou plus généralement la n ième séquence de substitution serait transmise à la place de la n-1 ième séquence substituée).

Les exemples illustrés sur les figures 2 et 3 conviennent en outre plus particulièrement au cas où aucune contrainte n'existe sur le délai au bout duquel de telles trames peuvent ainsi être élaborées à partir d'un train de données utiles incident, ce délai étant en effet dans ces exemples égal au temps d'analyse total d'une séquence de données utiles incidente, nécessaire pour permettre d'obtenir lesdites données d'exploitation, ce qui peut être prohibitif dans certaines applications telles que notamment l'application précitée à la transmission de données au sein des infrastructures d'un réseau de radiocommunication avec des mobiles tel que notamment le réseau GSM.

L'exemple illustré sur la figure 4 permet au contraire de satisfaire à une telle contrainte. Dans cet exemple, lesdites données d'exploitation se présentent de façon inversée par rapport au cas illustré sur les figures 2 et 3, en ce sens que:
- les premières données d'exploitation telles que S0 indiquant si la séquence de données utiles transmise diffère ou non de la séquence de données utiles à transmettre sont insérées non pas après le motif de synchronisation de la trame considérée, mais en fin de trame, c'est-à-dire avant le motif de synchronisation de la trame suivante,
- les deuxièmes données d'exploitation telles que S10 et S20 n'indiquent plus si la séquence de substitution correspondante telle que S1 et S2 est ou non la dernière à partir du début de la trame, mais si elle est ou non la dernière à partir de la fin de la trame.

Il est à noter qu'une telle trame ne peut alors être exploitée en réception avant de l'avoir reçue en totalité, mais que ceci n'introduit pas de retard notable, contrairement audit temps d'analyse qui aurait été nécessaire en émission.

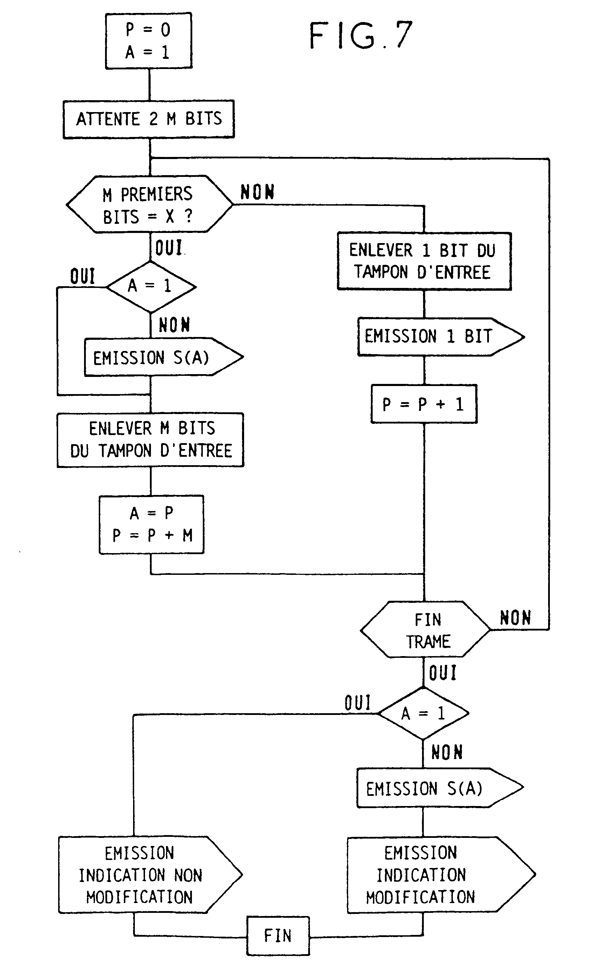

Un début d'analyse de ladite séquence de données utiles à transmettre reste en outre nécessaire avant de pouvoir élaborer une trame correspondante, d'où un léger retard à l'émission de telles trames, comme cela apparaîtra sur la figure 7.

En outre, dans l'exemple illustré, la deuxième (c'est-à-dire ici la dernière) séquence de substitution S2 est transmise à un emplacement déterminé avant les premières données d'exploitation S0, elles-mêmes tranmises à un emplacement déterminé avant le motif de synchronisation de la trame suivante (par exemple la dernière séquence de substitution est transmise immédiatement avant les premières données d'exploitation S0, elles-mêmes transmises immédiatement avant le motif de synchronisation de la trame suivante), et la première séquence de substitution S1 est transmise à la place de la deuxième (c'est-à-dire ici la dernière) séquence substituée X2 (ou plus généralement la n-1 ième séquence de substitution serait transmise à la place de la n ième séquence substituée).

Pour illustrer le gain en efficacité de la trame on peut considérer, à titre d'exemple, la trame TRAU à 8 kbit/s précitée.

Cette trame TRAU à 8 kbit/s comporte au total 160 bits, dont un motif de synchronisation formé de 8 bits à 0.

Suivant l'art antérieur, des bits à 1 sont insérés tous les 7 bits pour éviter une imitation du motif de synchronisation par les données utiles, soit au total 25 bits affectés à la fonction synchronisation.

Suivant l'invention, une séquence de substitution telle que, à titre d'exemple, celle décrite en relation avec la figure 5, comporte alors 8 bits d'adresse, soit au total 11 bits (en supposant que chacune des données telles que S10, S20, P et V ne comporte qu'un bit).

Les séquences interdites, ou séquences substituées, sont alors avantageusement des séquences de 11 bits, et le motif de synchronisation comporte également avantageusement une séquence de 11 bits, plus un bit pour indiquer la fin de cette séquence, auquel cas, en tenant par ailleurs compte d'un bit correspondant aux premières données d'exploitation S0, un gain d'efficacité de 12 bits peut être obtenu.

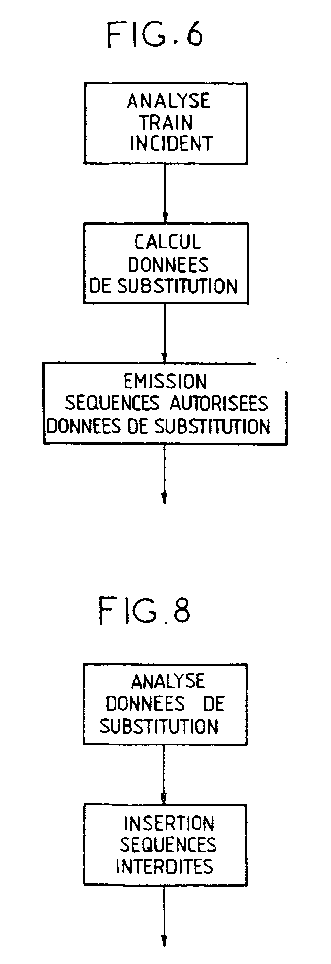

La figure 6 est un diagramme destiné à illustrer un procédé d'élaboration de trames, valable aussi bien pour l'exemple de la figure 2 que pour l'exemple de la figure 3.

Ce procédé comporte les étapes de:
- analyse dudit train incident, en vue de détecter des séquences de données utiles imitant ladite séquence interdite,
- calcul de données de substitution destinées à permettre, en réception, de pouvoir réinsérer des séquences interdites parmi les données utiles reçues,
- émission de données de substitution ainsi calculées, et de séquences autorisées, dans l'ordre souhaité.

Ladite analyse est en outre avantageusement effectuée au moyen d'une fenêtre glissante de largeur égale à N bits, où N désigne le nombre de bits d'une séquence interdite.

La figure 7 est un algorithme destiné à illustrer un procédé d'élaboration de trames suivant l'exemple illustré sur la figure 4, à partir d'un train incident de données utiles.

Ce procédé comporte, pour l'élaboration de la charge utile de chaque trame à émettre, les étapes suivantes:
- initialiser à une valeur égale à zéro une variable P correspondant à une adresse courante,
- initialiser une variable notée A à une valeur correspondant à une valeur d'adresse impossible, par exemple égale à -1,
- attendre la réception de 2M bits du train incident (où M désigne le nombre de bits du motif de synchronisation) dans un registre-tampon d'entrée,
- détecter si les M premiers bits reçus stockés dans le registre-tampon d'entrée correspondent à une séquence interdite notée X:
   -- dans le cas de détection de séquence interdite:
      --- si la variable A est égale à ladite valeur impossible :
         ---- enlever lesdits M premiers bits reçus du registre-tampon d'entrée,
         ---- réinitialiser la variable A à la valeur de la variable P,
         ---- incrémenter la variable P d'une valeur égale à M,
         ---- détecter si l'adresse courante correspond à une fin de trame:
            ----- dans le cas de détection de fin de trame:
               ------ si A n'est pas égal à ladite valeur impossible :émettre la séquence de substitution S(A) correspondant à une séquence interdite à insérer, en réception, à l'adresse A, puis émettre des premières données d'exploitation S0 indiquant une présence de séquence(s) de substitution dans la trame (ce qui a été indiqué par "émission indication modification"), et retourner au début de l'algorithme,
               ------ si A est égal à ladite valeur impossible, émettre des premières données d'exploitation S0 indiquant une absence de séquence(s) de substitution dans la trame (ce qui a été indiqué par " émission indication non modification"), puis retourner au début de l'algorithme,
            ----- dans le cas de non détection de fin de trame:
               ------ retourner à l'étape de détection de séquence interdite,
      --- si A n'est pas égal à ladite valeur impossible : émettre la séquence de substitution S(A),
   -- dans le cas de non détection de séquence interdite:
      --- enlever le premier bit reçu du registre tampon,
      --- émettre ce bit,
      --- incrémenter la variable P de 1,
      --- retourner à l'étape de détection de fin de trame.

La présente invention a également pour objet un dispositif d'émission de trames suivant l'invention, ce dispositif comportant des moyens pour mettre en oeuvre les différentes étapes des procédés d'émission ainsi décrits.

La réalisation de tels moyens ne présentant pas de difficulté particulière pour l'homme du métier, ceux-ci ne seront pas décrits de manière autrement plus détaillée que par leur fonction. D'une manière générale, un tel dispositif comporte:
- des moyens d'analyse dudit train incident, en vue de détecter des séquences de données utiles imitant ladite séquence interdite,
- des moyens de calcul de données de substitution destinées à permettre, en réception, de pouvoir réinsérer des séquences interdites parmi les données utiles reçues,
- des moyens d'émission de données utiles ne comportant aucune séquence interdite, et de données de substitution ainsi calculées, pour formation de ladite trame.

La figure 8 est un diagramme destiné à illustrer un procédé d'extraction de données utiles à partir de trames reçues suivant l'exemple de la figure 2.

Ce procédé comporte les étapes de:
- analyse de données de substitution,
- insertion de séquences interdites, parmi les données utiles reçues, de la façon déterminée par analyse desdites données de substitution.

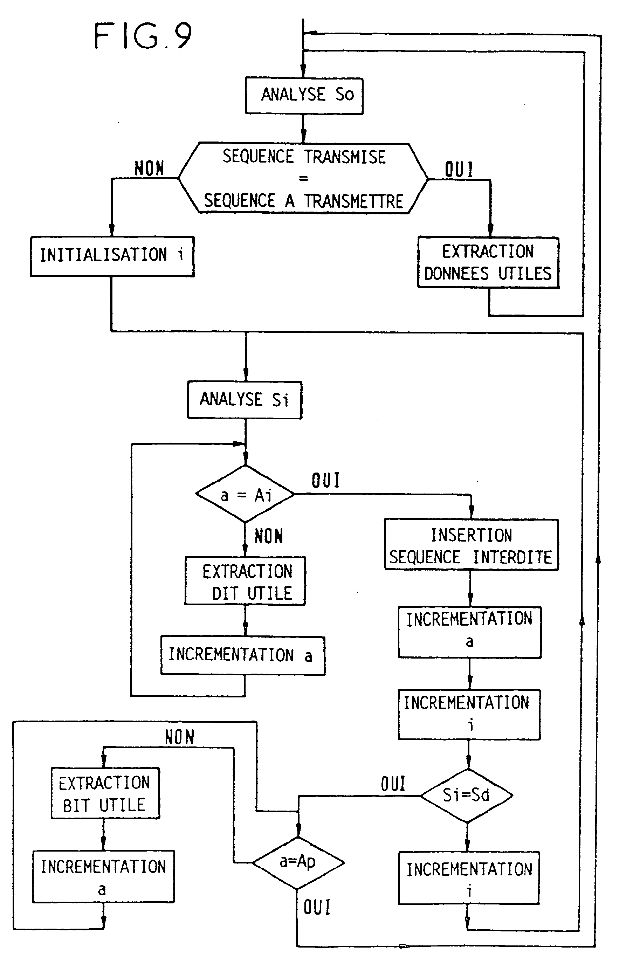

La figure 9 est un diagramme destiné à illustrer un procédé d'extraction d'un train de données utiles, à partir de trames reçues, valable aussi bien pour l'exemple illustré sur la figure 3 que, avec les aménagements qui seront indiqués, pour l'exemple illustré sur la figure 4.

Ce procédé comporte, à chaque détection d'un motif de synchronisation, les étapes suivantes:
- initialisation d'une variable "a" correspondant à une adresse courante,
- analyse des premières données d'exploitation S0 suivant le motif de synchronisation détecté et indiquant si la séquence de données utiles transmise diffère ou non de la séquence de données utiles à transmettre:
   -- si la séquence de données utiles transmise ne diffère pas de la séquence de données utiles à transmettre, extraction desdites données utiles transmises, pour formation du train de données utiles sortant,
   -- si la séquence de données utiles transmise diffère de la séquence de données utiles à transmettre:
      --- analyse de la première séquence de substitution S1 suivant les premières données d'exploitation S0, pour déterminer l'adresse A1 où insérer la première séquence interdite, c'est-à-dire aussi en l'occurrence l'adresse de la deuxième séquence de substitution S2, et pour déterminer, d'après les données d'exploitation S10 contenues dans cette séquence de substitution S1, si cette séquence de substitution est ou non la dernière de la trame,
      --- comparaison de l'adresse courante "a" et de l'adresse A1:
         ---- tant que "a" est inférieur à A1, extraction du bit de données utiles situé à l'adresse courante, pour formation dudit train de données utiles sortant, puis incrémentation correspondante de l'adresse courante "a" et retour à l'étape de comparaison de l'adresse courante "a" et de l'adresse A1,
         ---- si "a" est égal à A1, insertion d'une séquence interdite pour formation dudit train de données utiles sortant, puis incrémentation correspondante de l'adresse courante "a",
      --- parallèlement, si la séquence de substitution S1 n'est pas la dernière de la trame, analyse de la deuxième séquence de substitution S2 située à l'adresse A1, pour déterminer l'adresse A2 où insérer la deuxième séquence interdite (c'est-à-dire aussi l'adresse d'une éventuelle séquence de substitution S3) et pour déterminer, d'après les données d'exploitation S20 contenues dans cette séquence de substitution S2, si cette séquence de substitution est ou non la dernière de la trame,
         ---- tant que "a" est inférieur à A2, extraction du bit de données utiles situé à l'adresse courante, pour formation dudit train de données utiles sortant, puis incrémentation correspondante de l'adresse courante "a" et retour à l'étape de comparaison de l'adresse courante "a" et de l'adresse A2,
         ---- si "a" est égal à A2, insertion d'une séquence interdire pour formation dudit train de données utiles sortant, puis incrémentation correspondante de l'adresse courante "a",
      --- et ainsi de suite , jusqu'à la dernière séquence, notée Sd, de la trame reçue, ce qui a été symbolisé sur la figure 9 par une boucle dans laquelle on fait varier un indice i, jusqu'à ce que Si devienne égal à Sd, auquel cas:
         ---- tant que "a" est inférieur à l'adresse Ap du dernier bit de charge utile de la trame incidente, extraction du bit de données utiles situé à l'adresse courante, pour formation dudit train de données utiles sortant, puis incrémentation correspondante de l'adresse courante,
         ---- si "a" est égal à Ap, retour au début de l'algorithme.

Le même procédé reste valable pour des trames reçues suivant l'exemple illustré sur la figure 4, à condition de considérer que le motif de synchronisation à détecter est celui de la trame suivante, et à condition d'inverser l'ordre d'analyse des séquences de substitution, suivant ce qui a été expliqué en relation avec la figure 4.

La présente invention a également pour objet un dispositif de réception de trame suivant l'invention, ce dispositif comportant des moyens pour mettre en oeuvre les différentes étapes des procédés de réception ainsi décrits.

La réalisation de tels moyens ne présentant pas de difficulté particulière pour l'homme du métier, ceux-ci ne seront pas décrits de manière autrement plus détaillée que par leur fonction. D'une manière générale, un tel dispositif comporte:
- des moyens d'analyse de données de substitution de trames incidentes,
- des moyens d'insertion de séquences interdites, parmi les données utiles extraites desdites trames incidentes, aux emplacements obtenus par analyse desdites données de substitution, de manière à former ledit train de données utiles sortant.

## Revendications

1. Trame de transmission de données, cette trame comportant des données utiles (D1, D2, D3) précédées d'un motif de synchronisation (f), et **caractérisée par** des données de substitution (S1, S2) évitant une imitation du motif de synchronisation par les données utiles, lesdites données de substitution remplaçant des séquences de données utiles non transmises, dites séquences interdites (X1, X2), lesdites données de substitution comportent elles-mêmes deux types de données:
- des données dites d'exploitation (S0, S10, S20), permettant, en réception, de déterminer dans quelle mesure des séquences interdites sont présentes dans la séquence de données utiles à transmettre,
- des données dites d'adresse (A1, A2), permettant, en réception, de déterminer plus précisément le ou les emplacements où une séquence interdite doit être insérés parmi les données utiles reçues, lesdites données de substitution comportant des adresses où ré-insérer, en réception, des séquences interdites parmi les données utiles reçues, une adresse correspondant à l'adresse d'un bit de données utiles .

2. Trame selon la revendication 1, **caractérisée en ce que** lesdites données de substitution comportent:
- des premières données d'exploitation (S0), indiquant si la séquence de données utiles à transmettre contient ou non des séquences interdites, et,
- une séquence de substitution (S1, S2) se substituant à chaque séquences interdite (X1, X2) et contenant elle-même d'une part l'adresse (A1, A2) où insérer cette séquence interdite, et d'autre part des deuxièmes données d'exploitation (S10, S20) indiquant si cette séquence de substitution est ou non la dernière de la trame transmise.

3. Trame selon la revendication 2, **caractérisée en ce que** lesdites séquences de substitution comportent en outre:
- des données (P) de protection de ces séquences de substitution contre les erreurs de transmission.

4. Trame selon l'une des revendications 2 ou 3, **caractérisée en ce que** lesdites séquences de substitution comportent en outre:
- des données dites de verrouillage (V), destinées à éviter qu'une séquence interdite soit reproduite par introduction d'une séquence de substitution dans la trame transmise.

5. Trame selon l'une des revendications 2 à 4, **caractérisée en ce que** le nombre de bits d'une séquence de substitution est égal au nombre de bits d'une séquence interdite.

6. Trame selon la revendication 5, **caractérisée en ce que,** "n" bits parmi N d'une séquence dé substitution étant utilisés pour constituer lesdites données d'adresse, avec "n" au plus égal à N-1, le nombre maximum de bits par trame, exprimé comme une puissance de deux, est égal à 2ⁿ.

7. Trame selon l'une des revendications 2 à 6, **caractérisée en ce que** la première séquence de substitution (S1) est transmise après lesdites premières données d'exploitation (S0), et **en ce que** la n ième séquence de substitution (S2) est transmise à la place de la n-1 ième séquence interdite (X1).

8. Trame selon la revendication 7, **caractérisée en ce que** lesdits deuxièmes données d'exploitation (S10, S20) indiquent si la séquence de substitution correspondante est ou non la dernière à partir du début de la trame.

9. Trame selon l'une des revendications 2 à 6, **caractérisée en ce que** la dernière séquence de substitution (S2) est transmise avant lesdites premières données d'exploitation (S0), et **en ce que** la n-1 ième séquence de substitution (S1) est transmise à la place de la n ième séquence substituée (X2).

10. Trame selon la revendication 9, **caractérisée en ce que** lesdites deuxièmes données d'exploitation (S10, S20) indiquent si la séquence de substitution correspondante est ou non la dernière à partir de la fin de la trame.

11. Trame selon, l'une des revendications 1 à 6, **caractérisée en ce que** lesdites données de substitution (S0, S1, S2) sont toutes transmises avant lesdites données utiles (D1, D2, D3).

12. Procédé d'émission de trames selon l'une des revendications 1 à 11, lesdites trames comportant des données utiles (D1, D2, D3) précédées d'un motif de synchronisation (f), et des données de substitution (S1, S2) évitant une imitation du motif de synchronisation par les données utiles, lesdites données de substitution remplaçant des séquences de données utiles non transmises, dites séquences interdites (X1, X2), lesdites données de substitution comportent elles-mêmes deux types de données:
- des données dites d'exploitation (S0, S10, S20), permettant, en réception, de déterminer dans quelle mesure des séquences interdites sont présentes dans la séquence de données utiles à transmettre,
- des données dites d'adresse (A1, A2), permettant, en réception, de déterminer plus précisément le ou les emplacements où une séquence interdite doit être insérée parmi les données utiles reçues, lesdites données de substitution comportant des adresses où ré-insérer, en réception, des séquences interdites parmi les données utiles reçues, une adresse correspondant à l'adresse d'un bit de données utiles, ledit procédé permettant l'élaboration de telles trames à partir d'un train incident de données utiles, et comportant des étapes de:
- analyse dudit train incident, en vue de détecter des séquences de données utiles imitant ladite séquence interdite,
- calcul desdites données de substitution,
- formation desdites trames, à partir de données utiles ne comportant aucune séquence interdite, et de données de substitution ainsi calculées.

13. Procédé selon la revendication 12, **caractérisé en ce que** ladite étape d'analyse est effectuée au moyen d'une fenêtre glissante de largeur égale à N bits, où N désigne le nombre de bits d'une séquence interdite.

14. Procédé selon l'une des revendications 12 et 13, **caractérisé en ce que** ledit calcul de données de substitution nécessite une analyse desdites données utiles incidentes sur une longueur suffisante pour permettre de calculer toutes les données de substitution d'une trame avant émission du premier bit utile de cette trame.

15. Procédé selon l'une des revendications 12 et 13, **caractérisé en ce que** ledit calcul de données de substitution nécessite une analyse desdites données utiles incidentes sur une longueur inférieure à celle nécessaire pour permettre de calculer toutes les données de substitution d'une trame avant émission du premier bit utile de cette trame.

16. Dispositif d'émission de trames selon l'une des revendications 1 à 11, lesdites trames comportant des données utiles (D1, D2, D3) précédées d'un motif de synchronisation (f), et des données de substitution (S1, S2) évitant une imitation du motif de synchronisation par les données utiles, lesdites données de substitution remplaçant des séquences de données utiles non transmises, dites séquences interdites (X1, X2), lesdites données de substitution comportent elles-mêmes deux types de données:
- des données dites d'exploitation (S0, S10, S20), permettant, en réception, de déterminer dans quelle mesure des séquences interdites sont présentes dans la séquence de données utiles à transmettre,
- des données dites d'adresse (A1, A2), permettant, en réception, de déterminer plus précisément le ou les emplacements où une séquence interdite doit être insérée parmi les données utiles reçues, lesdites données de substitution comportant des adresses où ré-insérer, en réception, des séquences interdites parmi les données utiles reçues, une adresse correspondant à l'adresse d'un bit de données utiles, ledit dispositif permettant l'élaboration de telles trames à partir d'un train incident de données utiles, et comportant :
- des moyens d'analyse dudit train incident, en vue de détecter des séquences de données utiles imitant ladite séquence interdite,
- des moyens de calcul desdites données de substitution,
- des moyens de formation desdites trames, à partir de données utiles ne comportant aucune séquence interdite, et de données de substitution ainsi calculées.

17. Procédé de réception de trames selon l'une des revendications 1 à 11, lesdites trames comportant des données utiles (D1, D2, D3) précédées d'un motif de synchronisation (f), et des données de substitution (S1, S2) évitant une imitation du motif de synchronisation par les données utiles, lesdites données de substitution remplaçant des séquences de données utiles non transmises, dites séquences interdites (X1, X2), lesdites données de substitution comportent elles-mêmes deux types de données:
- des données dites d'exploitation (S0, S10, S20), permettant, en réception, de déterminer dans quelle mesure des séquences interdites sont présentes dans la séquence de données utiles à transmettre,
- des données dites d'adresse (A1, A2), permettant, en réception, de déterminer plus précisément le ou les emplacements où une séquence interdite doit être insérée parmi les données utiles reçues, une adresse correspondant à l'adresse d'un bit de données utiles, ledit procédé permettant l'extraction d'un train de données utiles à partir de telles trames, et comportant des étapes de :
- analyse desdites données de substitution de trames incidentes,
- insertion de séquences interdites, parmi les données utiles extraites des trames incidentes, aux emplacements obtenus par analyse desdites données de substitution, de manière à former ledit train de données utiles.

18. Dispositif de réception de trames selon l'une des revendications 1 à 11, lesdites trames comportant des données utiles (D1, D2, D3) précédées d'un motif de synchronisation (f), et des données de substitution (S1, S2) évitant une imitation du motif de synchronisation par les données utiles, lesdites données de substitution remplaçant des séquences de données utiles non transmises, dites séquences interdites (X1, X2), lesdites données de substitution comportent elles-mêmes deux types de données:
- des données dites d'exploitation (S0, S10, S20), permettant, en réception, de déterminer dans quelle mesure des séquences interdites sont présentes dans la séquence de données utiles à transmettre,
- des données dites d'adresse (A1, A2), permettant, en réception, de déterminer plus précisément le ou les emplacements où une séquence interdite doit être insérée parmi les données utiles reçues, lesdites données de substitution comportant des adresses où ré-insérer, en réception, des séquences interdites parmi les données utiles reçues, une adresse correspondant à l'adresse d'un bit de données utiles, ledit dispositif permettantl'extraction d'un train de données utiles à partir de telles trames, et comportant:
- des moyens d'analyse desdites données de substitution de trames incidentes,
- des moyens d'insertion de séquences interdites, parmi les données utiles extraites desdites trames incidentes, aux emplacements obtenus par analyse desdites données de substitution, de manière à former ledit train de données utiles.

19. Equipement de réseau de radiocommunications avec des mobiles, comportant un dispositif d'émission selon la revendication 16.

20. Equipement de réseau de radiocommunications avec des mobiles, comportant un dispositif de réception selon la revendication 18.

## Claims

1. A data transmission frame containing payload data (D1, D2, D3) preceded by a synchronization pattern (F), said frame being **characterized by** substitute data (S1, S2) avoiding an imitation of the synchronization pattern by the payload data, said substitute data replacing payload data sequences not transmitted, such sequences being referred to as "forbidden" sequences (X1, X2), and said substitute data itself comprises two types of data, namely:
"operating" data (SO, S10, S20) making it possible, on reception, to determine the extent to which forbidden sequences were present in the payload data to be transmitted; and
"address" data (A1, A2) making it possible, on reception, to determine more precisely the location(s) at which a forbidden sequence is to be inserted among the received payload data, said substitute data comprising addresses at which the forbidden sequences among the received payload data are to be reinserted, on reception, an address corresponding to the address of a payload data bit.

2. A frame according to claim 1, **characterized in that** said substitute data comprises:
first operating data (S0) indicating whether or not the payload data sequence to be transmitted contains forbidden sequences; and
a substitute sequence (S1, S2) serving as a substitute for each forbidden sequence (X1, X2), and itself containing firstly the address (A1, A2) at which the forbidden sequence is to be inserted, and secondly second operating data (S10, S20) indicating whether or not the substitute sequence is the last in the frame as transmitted.

3. A frame according to claim 2, **characterized in that** each of said substitute sequences further contains:
protective data (P) for protecting the substitute sequences against transmission errors.

4. A frame according to claim 2 or claim 3, **characterized in that** each of said substitute sequences further contains:
"locking" data (V) serving to prevent a forbidden sequence from being reproduced by inserting a substitute sequence into the frame as transmitted;

5. A frame according to any one of claims 2 to 4, **characterized in that** the number of bits in a substitute sequence is equal to the number of bits in a forbidden sequence.

6. A frame according to claim 5, **characterized in that** with "n" bits out of the N bits of a substitute sequence being used to constitute said address data, where "n" is not more than N-1, the maximum number of bits per frame, expressed as a power of two, is equal to 2ⁿ.

7. A frame according to any one of claims 2 to 6, **characterized in that** the first substitute sequence (S1) is transmitted after said first operating data (S0), and **in that** the nth substitute sequence (S2) is transmitted in place of the n-1th forbidden sequence (X1).

8. A frame according to claim 7, **characterized in that** said second operating data (S10, S20) indicates whether or not the corresponding substitute sequence is the last starting from the beginning of the frame.

9. A frame according to any one of claims 2 to 6, **characterized in that** the last substitute sequence (S2) is transmitted before said first operating data (S0), and **in that** the n-1th substitute sequence (S1) is transmitted in place of the nth substituted sequence (X2).

10. A frame according to claim 9, **characterized in that** said second operating data (S10, S20) indicates whether or not the corresponding substitute sequence is the last starting from the end of the frame.

11. A frame according to any one of claims 1 to 6, **characterized in that** all of said substitute data (S0, S1, S2) is transmitted before said payload data (D1, D2, D3),

12. A method of transmitting frames according to any one of claims 1 to 11, said frames containing both payload data (D1, D2, D3) preceded by a synchronization pattern (F), and substitute data (S1, S2) avoiding an imitation of the synchronization pattern by the payload data, said substitute data replacing payload data sequences not transmitted, such sequences being referred to as "forbidden" sequences (X1, X2), and said substitute data itself comprises two types of data, namely:
"operating" data (SO, S10, S20) making it possible, on reception, to determine the extent to which forbidden sequences were present in the payload data to be transmitted; and
"address" data (A1, A2) making it possible, on reception, to determine more precisely the location(s) at which a forbidden sequence is to be inserted among the received payload data, said substitute data comprising addresses at which the forbidden sequences between the received payload data are to be reinserted, on reception, an address corresponding to the address of a payload data bit, said method making it possible to form such frames from an incident stream of payload data, and comprising the following steps:
analyzing said incident stream to detect any payload data sequences that imitate said forbidden sequence;
computing said substitute data; and
forming said frames, from payload data comprising no forbidden sequence, and from substitute data thus computed.

13. A method according to claim 12, **characterized in that** the analyzing step is performed by means of a sliding window of width equal to N bits, where N designates the number of bits in a forbidden sequence.

14. A method according to claim 12 or 13, said method being **characterized in that** said computing of substitute data requires said incident payload data to be analyzed over a length that is long enough to enable all of the substitute data of a frame to be computed prior to transmitting the first payload bit of said frame.

15. A method according to claim 12 or 13, said method being **characterized in that** said computing of substitute data requires said incident payload data to be analyzed over a length that is shorter than that required to enable all of the substitute data of a frame to be computed prior to transmitting the first payload bit of said frame.

16. Apparatus for transmitting frames according to any one of claims 1 to 11, said frames containing both payload data (D1, D2, D3) preceded by a synchronization pattern (F), and substituted data (S1, S2) avoiding an imitation of the synchronization pattern by the payload data, said substitute data replacing payload data sequences not transmitted, such sequences being referred to as "forbidden" sequences (X1, X2), and said substitute data itself comprises two types of data, namely:
"operating" data (SO, S10, S20) making it possible, on reception, to determine the extent to which forbidden sequences were present in the payload data to be transmitted; and
"address" data (A1, A2) making it possible, on reception, to determine more precisely the location(s) at which a forbidden sequence is to be inserted among the received payload data, said substitute data comprising addresses at which the forbidden sequences between the received payload data are to be reinserted, on reception, an address corresponding to the address of a payload data bit, said apparatus enabling such frames to be formed from an incident stream of payload data, and including:
means for analyzing said incident stream to detect any payload data sequences that imitate said forbidden sequence;
means for computing said substitute data; and
means for forming said frames, from payload data comprising no forbidden sequence, and from substitute data thus computed.

17. A method of receiving frames according to any one of claims 1 to 11, said frames containing both payload data (D1, D2, D3) preceded by a synchronization pattern (F), and substitute data (S1, S2) avoiding an imitation of the synchronization pattern by the payload data, said substitute data replacing payload data sequences not transmitted, such sequences being referred to as "forbidden" sequences (X1, X2), and said substitute data itself comprises two types of data, namely:
"operating" data (SO, S10, S20) making it possible, on reception, to determine the extent to which forbidden sequences were present in the payload data to be transmitted; and
"address" data (A1, A2) making it possible, on reception, to determine more precisely the location(s) at which a forbidden sequence is to be inserted among the received payload data, said substitute data comprising addresses at which the forbidden sequences between the received payload data are to be reinserted, on reception, an address corresponding to the address of a payload data bit, said method making it possible for extracting a stream of payload data from such frames, and including the following steps:
analyzing said substitute data in incident frames;
inserting forbidden sequences among the payload data extracted from the incident frames, the insertion being performed at the locations obtained by analyzing said substitute data, so as to form said stream of payload data.

18. Apparatus for receiving frames according to any one of claims 1 to 11, said frames containing both payload data (D1, D2, D3) preceded by a synchronization pattern (F), and substitute data (S1, S2) avoiding an imitation of the synchronization pattern by the payload data, said substitute data replacing payload data sequences not transmitted, such sequences being referred to as "forbidden" sequences (X1, X2), and said substitute data itself comprises two types of data, namely:
"operating" data (SO, S10, S20) making it possible, on reception, to determine the extent to which forbidden sequences were present in the payload data to be transmitted; and
"address" data (A1, A2) making it possible, on reception, to determine more precisely the location(s) at which a forbidden sequence is to be inserted among the received payload data, said substitute data comprising addresses at which the forbidden sequences between the received payload data are to be reinserted, on reception, an address corresponding to the address of a payload data bit, said apparatus making it possible for extracting a stream of payload data from such frames, and including:
means for analyzing said substitute data in incident frames; and
means for inserting forbidden sequences among the payload data extracted from said incident frames, the insertion being performed at the locations obtained by analyzing said substitute data, so as to form said stream of payload data.

19. Network equipment for radiocommunication with mobile stations, the equipment comprising apparatus for transmitting according to claim 16.

20. Network equipment for radiocommunication with mobile stations, the equipment comprising apparatus for receiving according to claim 18.

## Patentansprüche

1. Datenübertragungsrahmen, wobei dieser Rahmen Nutzdaten (91, 92, 93) umfasst, denen ein Synchronisationsmuster (F) vorausgeht, **gekennzeichnet durch** Substitutionsdaten (51, 52), welche eine Imitation des Synchronisationsmusters **durch** die Nutzdaten verhindern, wobei die besagten Substitutionsdaten Sequenzen von nicht übertragenen Nutzdaten, sogenannte verbotene Sequenzen (X1, X2) ersetzen, wobei die besagten Substitutionsdaten selbst zwei Datentypen umfassen:
- Sogenannte Betriebsdaten (S0, S10, S20), welche es bei Empfang ermöglichen, zu ermitteln, in welchem Maße verbotene Sequenzen in der zu übertragenden Nutzdatensequenz vorhanden sind,
- sogenannte Adressdaten (A1, A2), welche es bei Empfang ermöglichen, die Stelle oder die Stellen, an welcher oder an welchen eine verbotene Sequenz unter den empfangenen Nutzdaten einzufügen sind, genauer zu bestimmen, wobei die besagten Substitutionsdaten Adressen enthalten, an denen die verbotenen Sequenzen bei Empfang unter den empfangenen Nutzdaten wieder einzufügen sind, wobei eine Adresse einer Nutzdaten-Bitadresse entspricht.

2. Rahmen nach Anspruch 1, **dadurch gekennzeichnet, dass** die besagten Substitutionsdaten umfassen:
- Erste Betriebsdaten (S0), welche angeben, ob die zu übertragende Nutzdatensequenz verbotene Sequenzen enthält oder nicht, und,
- eine Substitutionssequenz (S1, S2), welche jede verbotene Sequenz (X1, X2) ersetzt und selbst einerseits die Adresse (A1, A2), an welcher diese verbotene Sequenz einzufügen ist, und andererseits zweite Betriebsdaten (S10, S20), welche angeben, ob diese Substitutionssequenz die letzte des übertragenen Rahmens ist oder nicht, enthält.

3. Rahmen nach Anspruch 2, **dadurch gekennzeichnet, dass** die besagten Substitutionssequenzen weiterhin umfassen:
- Schutzdaten (P) dieser Substitutionssequenzen gegen Übertragundsfehler.

4. Rahmen nach einem der Ansprüche 2 oder 3, **dadurch gekennzeichnet, dass** die besagten Substitutionssequenzen weiterhin umfassen:
- Sogenannte Verriegelungsdaten (V), welche dazu bestimmt sind, zu verhindern, dass eine verbotene Sequenz durch das Einfügen einer Substitutionssequenz in den übertragenen Rahmen reproduziert wird.

5. Rahmen nach einem der Ansprüche 2 bis 4, **dadurch gekennzeichnet, dass** die Bitanzahl einer Substitutionssequenz gleich der Bitanzahl einer verbotenen Sequenz ist.

6. Rahmen nach Anspruch 5, **dadurch gekennzeichnet, dass** "n" Bits der N einer Substitutionssequenz dazu benutzt werden, die besagten Adressdaten zu erstellen, mit "n" höchstens gleich N-1, wobei die maximale Bitanzahl pro Rahmen, als Zweierpotenz ausgedrückt, gleich 2ⁿ ist.

7. Rahmen nach einem der Ansprüche 2 bis 6, **dadurch gekennzeichnet, dass** die erste Substitutionssequenz (S1) nach den besagten ersten Betriebsdaten (S0) übertragen wird, und dass die n-te Substitutionssequenz (S2) anstelle der n-1-ten verbotenen Sequenz (X1) übertragen wird.

8. Rahmen nach Anspruch 7, **dadurch gekennzeichnet, dass** die besagten zweiten Betriebsdaten (S10, S20) angeben, ob die entsprechende Substitutionssequenz ab Anfang des Rahmens die letzte ist oder nicht.

9. Rahmen nach einem der Ansprüche 2 bis 6, **dadurch gekennzeichnet, dass** die letzte Substituionssequenz (S2) vor den besagten ersten Betriebsdaten (S0) übertragen wird, und dass die n-1-te Substitutionssequenz (S1) anstelle der n-ten substituierten Sequenz (X2) übertragen wird.

10. Rahmen nach Anspruch 9, **dadurch gekennzeichnet, dass** die besagten zweiten Betriebsdaten (S10, S20) angeben, ob die entsprechende Substitutionssequenz ab Anfang des Rahmens die letzte ist oder nicht.

11. Rahmen nach einem der Ansprüche 1 bis 6, **dadurch gekennzeichnet, dass** die besagten Substitutionsdaten (Q0, S1, S2) alle vor den besagten Nutzdaten (D1, D2, D3) übertragen werden.

12. Verfahren zum Senden von Rahmen nach einem der Ansprüche 1 bis 11, wobei die besagten Rahmen Nutzdaten (91, 92, 93), denen ein Synchronisationsmuster (F) vorausgeht, sowie Substitutionsdaten (51, 52), welche eine Imitation des Synchronisationsmusters durch die Nutzdaten verhindern, umfassen, wobei die besagten Substitutionsdaten Sequenzen von nicht übertragenen Nutzdaten, sogenannte verbotene Sequenzen (X1, X2), ersetzen, wobei die besagten Substitutionsdaten selbst zwei Datentypen umfassen:
- Sogenannte Betriebsdaten (S0, S10, S20), welche es bei Empfang ermöglichen, zu ermitteln, in welchem Maße verbotene Sequenzen in der zu übertragenden Nutzdatensequenz vorhanden sind,
- sogenannte Adressdaten (A1, A2), welche es bei Empfang ermöglichen, die Stelle oder die Stellen, an welcher oder an welchen eine verbotene Sequenz unter den empfangenen Nutzdaten einzufügen ist, genauer zu bestimmen, wobei die besagten Substitutionsdaten Adressen enthalten, an welchen die verbogenen Sequenzen bei Empfang unter den empfangenen Nutzdaten wieder einzufügen sind, wobei eine Adresse der Nutzdaten-Bitadresse entspricht, wobei das besagte Verfahren es ermöglicht, solche Rahmen ausgehend von einem eingehenden Nutzdatenstrom zu erstellen, und die folgenden Schritte umfasst:
- Analyse des besagten eingehenden Stroms, um Nutzdatensequenzen zu delektieren, welche die besagte verbotene Sequenz imitieren,
- Berechnen der besagten Substitutionsdaten,
- Bilden der besagten Rahmen ausgehend von Nutzdaten, welche keine verbotene Sequenz enthalten, und von auf diese Weise berechneten Substitutionsdaten.

13. Verfahren nach Anspruch 12, **dadurch gekennzeichnet, dass** der besagte Schritt der Analyse anhand eines Gleitfensters, dessen Breite gleich N Bits ist, wobei N die Bitanzahl einer verbotenen Sequenz bezeichnet.

14. Verfahren nach einem der Ansprüche 12 und 13, **dadurch gekennzeichnet, dass** das besagte Berechnen von Substitutionsdaten eine Analyse der besagten eingehenden Nutzdaten auf einer ausreichenden Länge, um das Berechnen aller Substitutionsdaten eines Rahmens vor dem Senden des ersten Nutzbits dieses Rahmens zu ermöglichen, erfordert.

15. Verfahren nach einem der Ansprüche 12 und 13, **dadurch gekennzeichnet, dass** das besagte Berechnen von Substitutionsdaten eine Analyse der besagten eingehenden Nutzdaten auf einer Länge, welche kürzer ist als die zum Berechnen aller Substitutionsdaten eines Rahmens vor dem Senden des ersten Nutzbits dieses Rahmens erforderliche Länge, erfordert.

16. Einrichtung zum Senden von Rahmen nach einem der Ansprüche 1 bis 11, wobei die besagten Rahmen Nutzdaten (91, 92, 93), denen ein Synchronisationsmuster (F) vorausgeht, sowie Substitutionsdaten (51, 52), welche eine Imitation des Synchronisationsmusters durch die Nutzdaten verhindern, umfassen, wobei die besagten Substitutionsdaten Sequenzen von nicht übertragenen Nutzdaten, sogenannte verbotene Sequenzen (X1, X2), ersetzen, wobei die besagten Substitutionsdaten selbst zwei Datentypen umfassen;
- Sogenannte Betriebsdaten (S0, S10, S20), welche es bei Empfang ermöglichen, zu ermitteln, in welchern Maße verbotene Sequenzen in der zu übertragenden Nutzdatensequenz vorhanden sind,
- sogenannte Adressdaten (A1, A2), welche es bei Empfang ermöglichen, die Stelle oder die Stellen, an welcher oder an welchen eine verbotene Sequenz unter den empfangenen Nutzdaten einzufügen sind, genauer zu bestimmen, wobei die besagten Substitutionsdaten Adressen enthalten, an denen die verbotenen Sequenzen bei Empfang unter den empfangenen Nutzdaten wieder einzufügen sind, wobei eine Adresse der Nutzdaten-Bitadresse entspricht, wobei das besagte Verfahren es ermöglicht, solche Rahmen ausgehend von einem eingehenden Nutzdatenstrom zu erstellen, und umfassend:
- Mittel zur Analyse des besagten eingehenden Stroms, um Nutzdatensequenzen zu detektieren, welche die besagte verbotene Sequenz imitieren,
- Mittel zum Berechnen der besagten Substitutionsdaten,
- Mittel zum Bilden der besagten Rahmen ausgehend von Nutzdaten, welche keine verbotene Sequenz enthalten, und von auf diese Weise berechneten Substitutionsdaten.

17. Verfahren zum Empfangen von Rahmen nach einem der Ansprüche 1 bis 11, wobei die besagten Rahmen Nutzdaten (91, 92, 93), denen ein Synchronisationsmuster (F) vorausgeht, sowie Substitutionsdaten (51, 52), welche eine Imitation des Synchronisationsmusters durch die Nutzdaten verhindern, umfassen, wobei die besagten Substitutionsdaten Sequenzen von nicht übertragenen Nutzdaten, sogenannte verbotene Sequenzen (X1, X2) ersetzen, wobei die besagten Substitutionsdaten selbst zwei Datentypen umfassen:
- Sogenannte Betriebsdaten (S0, S10, S20), welche es bei Empfang ermöglichen, zu ermitteln, in welchem Maße verbotene Sequenzen in der zu übertragenden Nutzdatensequenz vorhanden sind,
- sogenannte Adressdaten (A1, A2), welche es bei Empfang ermöglichen, die Stelle oder die Stellen, an welcher oder an welchen eine verbotene Sequenz unter den empfangenen Nutzdaten einzufügen ist, genauer zu bestimmen, wobei eine Adresse der Nutzdaten-Bitadresse entspricht, wobei das besagte Verfahren es ermöglicht, einen Nutzdatenstrom aus solchen Rahmen zu extrahieren, weiterhin die folgenden Schritte umfassend:
- Analyse der besagten Substitutionsdaten von eingehenden Rahmen,
- Einfügen von verbotenen Sequenzen unter die aus den eingehenden Rahmen extrahierten Nutzdaten an den anhand der Analyse der besagten Substitutionsdaten ermittelten Stellen, um den besagten Nutzdatenstrom zu bilden.

18. Einrichtung zum Empfangen von Rahmen nach einem der Ansprüche 1 bis 11, wobei die besagten Rahmen Nutzdaten (91, 92, 93), denen ein Synchronisationsmuster (F) vorausgeht, sowie Substitutionsdaten (51, 52), welche eine Imitation des Synchronisationsmusters durch die Nutzdaten verhindern, umfassen, wobei die besagten Substitutionsdaten Sequenzen von nicht übertragenen Nutzdaten, sogenannte verbotene Sequenzen (X1, X2), ersetzen, wobei die besagten Substitutionsdaten selbst zwei Datentypen umfassen:
- Sogenannte Betriebsdaten (S0, S10, S20), welche es bei Empfang ermöglichen, zu ermitteln, in welchem Maße verbotene Sequenzen in der zu übertragenden Nutzdatensequenz vorhanden sind,
- sogenannte Adressdaten (A1, A2), welche es bei Empfang ermöglichen, die Stelle oder die Stellen, an welcher oder an welchen eine verbotene Sequenz unter den empfangenen Nutzdaten einzufügen ist, genauer zu bestimmen, wobei die besagten Substitutionsdaten Adressen enthalten, an denen die verbotenen Sequenzen bei Empfang unter den empfangenen Nutzdaten wieder einzufügen sind, wobei eine Adresse der Nutzdaten-Bitadresse entspricht, wobei das besagte Verfahren es ermöglicht, einen Nutzdatenstrom aus solchen Rahmen zu extrahieren, weiterhin die folgenden Schritte umfassend:
- Mittel zur Analyse der besagten Nutzdaten von eingehenden Rahmen,
- Mittel zum Einfügen von verbotenen Sequenzen unter die aus den besagten eingehenden Rahmen extrahierten Nutzdaten an den anhand der Analyse der besagten Substitutionsdaten ermittelten Stellen, um den besagten Nutzdatenstrom zu bilden.

19. Ausrüstung eines Funkkommunikationsnetzes mit Mobilgeräten mit einer Sendevorrichtung nach Anspruch 16.

20. Ausrüstung eines Funkkommunikationsnetzes mit Mobilgeräten mit einer Empfarigsvorrichtung nach Anspruch 18.
